(19) Europäisches Patentamt
European Patent Office
Office européen des brevets

(11) **EP 3 144 275 B1**

(12) **EUROPEAN PATENT SPECIFICATION**

(45) Date of publication and mention
of the grant of the patent:
**22.04.2020  Bulletin 2020/17**

(51) Int Cl.:
***C01B 3/38*** *(2006.01)*

(21) Application number: **16189765.7**

(22) Date of filing: **20.09.2016**

(54) **METHOD OF OPERATING A CATALYTIC STEAM-HYDROCARBON REFORMER**

VERFAHREN ZUM BETRIEB EINES KATALYTISCHEN DAMPF -KOHLENWASSERSTOFF-REFORMERS

PROCÉDÉ DE FONCTIONNEMENT D'UN REFORMEUR CATALYTIQUE A VAPEUR D'HYDROCARBURES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.09.2015  EP 15186043**

(43) Date of publication of application:
**22.03.2017  Bulletin 2017/12**

(73) Proprietor: **AIR PRODUCTS AND CHEMICALS, INC.**
**Allentown, PA 18195-1501 (US)**

(72) Inventors:
• **Jin, Bo**
**Orefield, PA Pennsylvania 18069 (US)**
• **Li, Xianming Jimmy**
**Orefield, PA Pennsylvania 18069 (US)**
• **Lunsford, Jeremy Charles**
**Minneapolis, MN Minnesota 55419 (US)**

(74) Representative: **SSM Sandmair**
**Patentanwälte Rechtsanwalt**
**Partnerschaft mbB**
**Joseph-Wild-Straße 20**
**81829 München (DE)**

(56) References cited:
**EP-A2- 2 050 714    WO-A1-2012/057922**
**WO-A1-2013/002752**

## Description

Hydrogen and/or synthesis gas production by catalytic steam-hydrocarbon reforming, also called steam reforming, steam-methane reforming or SMR, is well-known and is carried out in a reactor called a reformer. The reforming reaction is an endothermic reaction and may be described generally as $C_nH_m + n\,H_2O \rightarrow n\,CO + (m/2 + n)\,H_2$. Hydrogen is generated when synthesis gas is generated. The process, being endothermic, is an energy intensive process. Since energy costs are a significant part of the operating cost, the hydrogen production industry desires to improve the thermal efficiency of the reformer operation.

Steam is one of the reactants in the reforming reaction. In catalytic steam-hydrocarbon reformers, a hydrocarbon-containing feedstock is combined with the steam at a mixing Tee to form a mixed feed. The mixed feed is heated and passed to reformer tubes in a fired tubular reformer to undergo the reforming reaction. The mixed feed may first be passed to a so-called prereformer prior to reaction in the reformer tubes.

The steam provided for the reforming reaction is typically called process steam, distinguished from export steam, which is exported from the reforming plant as a product. The amount of process steam used is a key operating parameter for the catalytic steam-hydrocarbon process. On the one hand, the thermal efficiency of the catalytic steam-hydrocarbon reformer increases as the amount of process steam decreases due to reduced waste heat losses. On the other hand, the propensity for carbon formation on the catalyst in the reformer tubes increases as the amount of process steam decreases below a critical value.

The prior art teaches that when carbon is formed in the catalyst-containing reformer tubes, the carbon forms on or in the catalyst. Carbon formation deactivates and/or disintegrates the reforming catalyst, causing undesired pressure drop through the reformer tubes and/or overheating of the tubes. If the catalyst is deactivated and/or disintegrated, hydrogen production must be interrupted in order to regenerate or replace the catalyst. Consequently, the amount of process steam used is generally greater than what is needed for the reforming reaction to avoid carbon formation.

In industrial practice, the amount of process steam used is controlled using a parameter called the "steam-to-carbon molar ratio," also called simply the "steam-to-carbon ratio" and abbreviated "S/C." The steam-to-carbon molar ratio of the feed is the ratio of the molar flow rate of steam in the feed to the molar flow rate of hydrocarbon-based carbon in the feed.

Setting and controlling the steam-to-carbon ratio is important for catalytic steam-hydrocarbon reformer operation. Ideally, operators want to operate with a steam-to-carbon ratio at the lowest suitable value such that the reformer operates at its highest efficiency with no risk of carbon formation on the reforming catalyst.

WO 2013/002752 describes a method for setting and controlling the steam flow depending on the propensity of carbon formation on or in the catalyst pellets.

It is an object of the invention to operate a catalytic steam-hydrocarbon reformer with a low steam-to-carbon ratio such that the reformer operates at a high efficiency while a decrease in the activity of the catalyst due to carbon forming on the catalyst is avoided.

The object is solved by the method of claim 1.

FIG. 1 is a process flow diagram for a hydrogen production facility.
FIG. 2 is a graph with a plot of process gas temperatures and a plot of tube wall temperatures for an operating reformer furnace.

The ensuing detailed description provides preferred exemplary embodiments only, and is not intended to limit the scope, applicability, or configuration of the invention. Rather, the ensuing detailed description of the preferred exemplary embodiments will provide those skilled in the art with an enabling description for implementing the preferred exemplary embodiments of the invention, it being understood that various changes may be made in the function and arrangement of elements without departing from scope of the invention as defined by the claims.

The articles "a" and "an" as used herein mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used.

The adjective "any" means one, some, or all indiscriminately of whatever quantity.

The term "and/or" placed between a first entity and a second entity includes any of the meanings of (1) only the first entity, (2) only the second entity, and (3) the first entity and the second entity. The term "and/or" placed between the last two entities of a list of 3 or more entities means at least one of the entities in the list including any specific combination of entities in this list. For example, "A, B and/or C" has the same meaning as "A and/or B and/or C" and comprises the following combinations of A, B and C: (1) only A, (2) only B, (3) only C, (4) A and B and not C, (5) A and C and not B, (6) B and C and not A, and (7) A and B and C.

The phrase "at least one of" preceding a list of features or entities means one or more of the features or entities in the list of entities, but not necessarily including at least one of each and every entity specifically listed within the list of entities and not excluding any combinations of entities in the list of entities. For example, "at least one of A, B, or C" (or equivalently "at least one of A, B, and C" or equivalently "at least one of A, B, and/or C") has the same meaning as "A and/or B and/or C" and comprises the following combinations of A, B and C: (1) only A, (2) only B, (3) only C, (4) A and B and not C, (5) A and C and not B, (6) B and C and not A, and (7) A and B and C.

The term "plurality" means "two or more than two."

The phrase "at least a portion" means "a portion or all." The at least a portion of a stream may have the same composition with the same concentration of each of the species as the stream from which it is derived. The at least a portion of a stream may have a different concentration of species than that of the stream from which it is derived. The at least a portion of a stream may include only specific species of the stream from which it is derived.

As used herein, "first," "second," "third," etc. are used to distinguish from among a plurality of steps and/or features, and is not indicative of the total number, or relative position in time and/or space unless expressly stated as such.

As used herein, the term "catalyst" refers to a support, catalytic material, and any other additives which may be present on the support.

Illustrative embodiments of the invention are described below. While the invention is susceptible to various modifications and alternative forms, specific embodiments thereof have been shown by way of example in the drawings and are herein described in detail. It should be understood, however that the description herein of specific embodiments is not intended to limit the invention to the particular forms disclosed, but on the contrary, the invention is to cover all modifications, equivalents, and alternatives falling within the scope of the invention as defined by the appended claims.

For the purposes of simplicity and clarity, detailed descriptions of well-known devices, circuits, and methods are omitted so as not to obscure the description of the present invention with unnecessary detail.

The present invention relates to a method of operating a catalytic steam-hydrocarbon reformer. Catalytic steam-hydrocarbon reformers are used in industry for the production industrial hydrogen, methanol, and/or ammonia.

The method utilizes catalytic steam-hydrocarbon reforming. Catalytic steam-hydrocarbon reforming, also called steam methane reforming (SMR), catalytic steam reforming, or steam reforming, is defined as any process used to convert reformer feedstock into reformate by reaction with steam over a catalyst. Reformate, also called synthesis gas, or simply syngas, as used herein is any mixture comprising hydrogen and carbon monoxide. The reforming reaction is an endothermic reaction and may be described generally as $C_nH_m + n\,H_2O \rightarrow n\,CO + (m/2 + n)\,H_2$. Hydrogen is generated when reformate is generated.

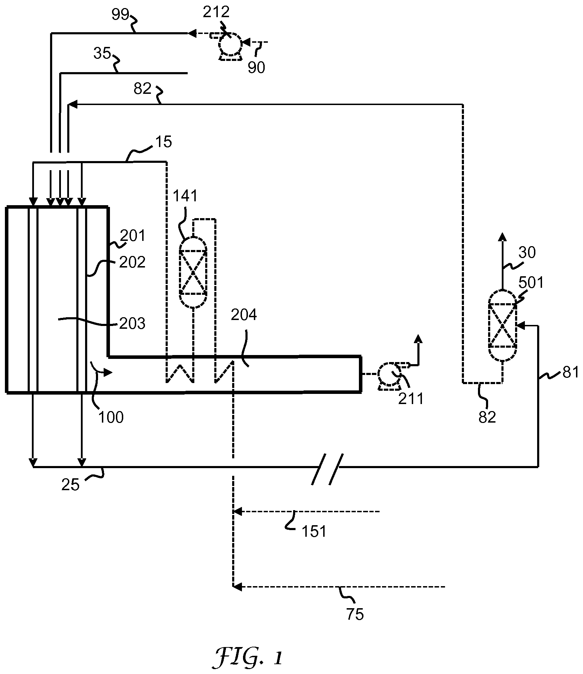

The method is described with reference to the FIG. 1 showing a process flow diagram.

The method comprises introducing a reformer feed gas mixture 15 comprising at least one hydrocarbon and steam into a catalyst-containing reformer tube 202 in a reformer furnace 201. The reformer feed gas mixture 15 has a hydrocarbon-based carbon flow rate, $C$, and a steam flow rate, $S_{op}$, where the steam flow rate, $S_{op}$, relative to the hydrocarbon-based carbon flow rate, $C$, in the reformer feed gas mixture can be changed or varied. The reformer feed gas mixture is reacted in a reforming reaction under reaction conditions effective to form a reformate 25 comprising $H_2$, CO, $CH_4$, and $H_2O$, and the reformate 25 is withdrawn from the catalyst-containing tube 202.

The reformer feed gas mixture 15 may be any feed gas mixture suitable for introducing into a catalytic steam-hydrocarbon reformer for forming a reformate. The reformer feed gas mixture 15 comprises at least one hydrocarbon and steam. The at least one hydrocarbon may be methane. The reformer feed gas mixture 15 is formed from a reformer feed 75 and steam 151. The reformer feed may be hydrogenated in a hydrogenator (not shown). The reformer feed may be desulphurized in a hydrodesulphurization unit (not shown) with hydrogen added for hydrodesulphurization. Hydrogen for hydrogentation and/or hydrodesulphurization may be provided from a hydrogen-containing product gas 30, for example from a pressure swing adsorption unit 501. The reformer feed gas mixture may be prereformed; formed by reacting the reformer feed 75 and steam 151 in a prereformer 141. The reformer feed 75 may be formed from a hydrocarbon feed, which may be natural gas, methane, naphtha, propane, refinery fuel gas, refinery off-gas, other suitable hydrocarbon feed known in the art, or combinations thereof.

The reforming reaction takes place inside the catalyst-containing reformer tube 202 in reformer furnace 201. The reformer feed gas mixture is reacted in this reforming reaction under reaction conditions thereby forming a process gas within the catalyst-containing reformer tube. The process gas may in particular contain hydrogen formed in the reforming reaction in the catalyst-containing reformer tube. A reformer furnace, also called a catalytic steam reformer, steam methane reformer, and steam-hydrocarbon reformer, is defined herein as any fuel-fired furnace used to convert feedstock containing elemental hydrogen and carbon into reformate by a reaction with steam over a catalyst with heat provided by combustion of a fuel.

Reformer furnaces with a plurality of catalyst-containing reformer tubes, i.e. tubular reformers, are well-known in the art. Any suitable number of catalyst-containing reformer tubes may be used in the reformer furnace. Suitable materials and methods of construction are known. Catalyst in the catalyst-containing reformer tubes may be any suitable catalyst known in the art, for example, a supported catalyst comprising nickel.

The method may be applied or carried out using a single catalyst-containing reformer tube of a plurality of catalyst-containing reformer tubes or using multiple catalyst-containing reformer tubes in the reformer furnace.

The reaction conditions effective to form the reformate 25 in the catalyst-containing reformer tube 202 may comprise a temperature ranging from 500°C to 1000°C and a pressure ranging from 203 kPa to 5,066 kPa (absolute). The reaction condition temperature may be as measured by any suitable temperature sensor, for example a type J thermocouple. The reaction condition pressure may be as measured by any suitable pressure sensor known in the art, for example a pressure gauge as available from Mensor.

The hydrocarbon-based carbon flow rate may be a molar flow rate or a mass flow rate. The steam flow rate may be a molar flow rate or a mass flow rate.

The hydrocarbon-based carbon flow rate, $C$, is the flow rate of hydrocarbon-based carbon, i. e. the flow rate of all carbon present in the respective process stream as a constituent of a hydrocarbon. For example, the molar flow rate of hydrocarbon-based carbon is the molar flow rate of all carbon which is a constituent of any hydrocarbon (i.e. excluding carbon associated with carbon monoxide and carbon dioxide) present in the respective process stream. For example, if the total molar flow rate of process stream 15 is 100 moles/h, and the mole fraction of methane is 0.35, the mole fraction of ethane is 0.1, and the mole fraction of carbon monoxide is 0.05, then the molar flow rate of hydrocarbon-based carbon is 55 moles/h. Methane contributes 35 moles/h of hydrocarbon based carbon. Ethane contributes 20 moles/h of hydrocarbon-based carbon. And carbon monoxide contributes zero moles/h of hydrocarbon based carbon. The mass flow rate of hydrocarbon-based carbon is analogously calculated.

The method comprises combusting a fuel 35, 82 with an oxidant gas 99 in a combustion section 203 of the reformer furnace 201 external to the catalyst-containing reformer tube 202. The fuel is combusted under conditions effective to combust the fuel 35, 82 to form a combustion product gas 100 and generate heat to supply energy for reacting the reformer feed gas mixture 15 inside the catalyst-containing reformer tube 202. The combustion product gas 100 is then withdrawn from the combustion section 203 of the reformer furnace 201.

Any suitable burner may be used to introduce the fuel 82, 35 and the oxidant gas 99 into the combustion section 203. Combustion of the fuel 82, 35 with the oxidant gas 99 generates heat to supply energy for reacting the reformer feed gas mixture 15 inside the plurality of catalyst-containing reformer tubes 202. The combustion product gas 100 is withdrawn from the combustion section 203 of the reformer furnace 201 and passed to the convection section 204 of the reformer furnace 201 to supply heat to other process streams. The combustion section (also called the radiant, radiation, or radiative section) of the reformer furnace is that part of the reformer furnace containing the plurality of catalyst-containing reformer tubes 202. The convection section of the reformer furnace is that part of the reformer furnace containing heat exchangers other than the plurality of catalyst-containing reformer tubes. The heat exchangers in the convection section may be for heating process fluids other than reformate from the plurality of catalyst-containing reformer tubes, such as water/steam, air, pressure swing adsorption unit by-product gas, reformer feed gas mixture prior to introduction into the catalyst-containing reformer tubes, prereformed reformer feed gas, etc. The convention section may also, if desired, contain a convective prereformer.

Furnace conditions effective to combust the fuel may comprise a furnace temperature ranging from 600°C to 1500°C and a pressure ranging from 98 kPa to 101.4 kPa (absolute). Actual flame temperatures are generally higher. The temperature may be as measured by a thermocouple, an optical pyrometer, or any other calibrated temperature measurement device known in the art for measuring furnace temperatures. The pressure may be as measured by any suitable pressure sensor known in the art, for example a pressure gauge as available from Mensor.

The fuel 82, 35 may be formed from a by-product gas 82 from a pressure swing adsorption unit 501 and a supplemental fuel 35. By-product gas from a pressure swing adsorption unit is often called pressure swing adsorber tail gas, and supplemental fuel is often called trim fuel. The by-product gas 82 and supplemental fuel 35 may be heated before being used as fuel. By-product gas 82 and supplemental fuel 35 may be blended and introduced together through a burner to the combustion section 203, or they may be introduced separately through different ports in the burner. Alternatively, the by-product gas 82 may be introduced through the primary burner and the supplemental fuel 35 may be introduced through lances near the burner.

The oxidant gas 99 is a gas containing oxygen and may be air, oxygen-enriched air, oxygen-depleted air such as gas turbine exhaust, industrial grade oxygen, or any other oxygen-containing gas known for use in a reformer furnace for combustion. For example, air 90 may be compressed in forced draft fan 212, heated in a heat exchanger (not shown), and passed to the reformer furnace 201 as oxidant gas 99.

Combustion product gas 100 may heat a number of different process streams in the convection section 204 of the reformer furnace 201. The combustion product gas 100 may heat the streams in various different configurations (order of heating). The combustion product gas 100 may then be passed to an induced draft fan 211 and exhausted.

The method comprises determining a steam flow rate, $S_{det}$, at which carbon forms on an inner wall segment of the catalyst-containing reformer tube 202 at a first hydrogen production rate. The highest steam flow rate at which carbon forms on the inner wall segment at a hydrogen production rate may be termed a critical steam flow rate, $S_{critical}$, for wall-carbon formation at that hydrogen production rate. The determined steam flow rate, $S_{det}$, may be the critical steam flow rate, $S_{critical}$, for wall-carbon formation.

By determining the steam flow rate, $S_{det}$, and controlling the steam flow rate, $S_{op}$, responsive to determining the steam flow rate, $S_{det}$, the steam flow rate, $S_{op}$, can be lowered as compared to the steam flow rate chosen in accordance with WO 2013/002752 while a decrease in the activity of the catalyst due to carbon forming on the catalyst can nevertheless be avoided.

Heavy hydrocarbons (i.e. C2+ hydrocarbons) in the reformer feed gas mixture thermally crack more easily than methane. It is expected that reformer feed gas mixtures with heavy hydrocarbons will more readily deposit carbon on the inner wall segment of the catalyst-containing reformer tube. Therefore the present method is particularly useful when heavy hydrocarbons are in the reformer feed gas mixture.

The steam flow rate at which carbon forms on the inner wall segment of the catalyst-containing reformer tube may be determined by:

varying the steam flow rate relative to the hydrocarbon-based carbon flow rate;
measuring a sequence of temperatures of the process gas inside the catalyst-containing reformer tube at a first location inside the catalyst-containing reformer tube proximate the inner wall segment responsive to changes in the steam flow rate relative to the hydrocarbon-based carbon flow rate;
measuring a sequence of temperatures on an outer wall of the catalyst-containing reformer tube at a second location proximate the inner wall segment responsive to the changes in the steam flow rate relative to the hydrocarbon-based carbon flow rate;
wherein the sequence of temperatures of the process gas at the first location and the sequence of temperatures on the outer wall at the second location at the various steam flow rates include temperatures indicative of carbon formation on the inner wall segment of the catalyst-containing reformer tube and temperatures not indicative of carbon formation on the inner wall segment of the catalyst-containing reformer tube, the temperatures indicative of carbon formation having steam flow rates corresponding therewith, and the temperatures not indicative of carbon formation having steam flow rates corresponding therewith; and
screening the sequence of temperatures of the process gas at the first location and the sequence of temperatures on the outer wall at the second location at various steam flow rates for temperatures indicative of carbon formation on the inner wall segment of the catalyst-containing reformer tube (202) to determine the steam flow rate, $S_{det}$, at which carbon forms on the inner wall segment of the catalyst-containing reformer tube (202).

The steam flow rates corresponding to the temperatures indicative of carbon formation on the inner wall segment of the catalyst-containing reformer tube may include two or more steam flow rates. The steam flow rate, $S_{det}$, may be the highest of the two or more steam flow rates.

The first location may be within a distance of 0.5 m or 0.3 m of the inner wall segment. The second location may be within a distance of 0.5 m or 0.3 m of the inner wall segment

When carbon forms on the inner wall of a catalyst-containing reformer tube, the local temperature on the wall segment where carbon forms will increase and generate what may be described as a hot-band, a perceptibly noticeable high-temperature band on the tube wall.

The first location and the second location may be selected proximate the observed hot-band. The first location and the second location may be within a distance one from the other of at most 0.5 m or at most 0.3 m and/or at most 10% or at most 5% of the length of the catalyst-containing reformer tube. The distance is measured as a straight-line distance between the first location and the second location. The first location may be at any radial location within the tube, for example, in or near the center, or at or near the wall, or any place in between. The second location may be at any location on the outer wall without regard to the angular orientation of the first location.

The sequence of temperatures of the process gas inside the catalyst-containing reformer tube may be measured using a thermocouple inside the catalyst-containing reformer tube. The temperature of the process gas may be measured a multiple locations inside the catalyst-containing reformer tube, including the first location. The temperature of the process gas inside the catalyst-containing reformer tube may be measured using a Daily Thermetrics's CatTracker® probe, for example, as described in the article "Reformer monitoring via in-tube temperature measurement" by Smith IV et al. 2014 (www.digitalrefining.com/article/1000924).

The sequence of temperatures on the outer wall of the catalyst-containing reformer tube may be measured using an optical pyrometer, a camera as described for example in U.S. Pat. No. 8,300,880, or other known device for measuring reformer tube temperatures.

The steam flow rate relative to the hydrocarbon-based carbon flow rate may be systematically decreased while measuring a sequence of process gas temperatures inside the reformer tube and while measuring a sequence of reformer tube wall temperatures until a hot-band is detected. The sequence of process gas temperature and the sequence of reformer tube wall temperatures may be evaluated for an indication of carbon formation on the inner wall segment of the catalyst-containing reformer tube.

Carbon formation may be indicated by the reformer tube wall temperature exceeding the process gas temperature by greater than a selected difference while the process gas temperature remains less than a selected value. Temperatures indicative of carbon formation result from an increased thermal resistance due to carbon formation on the inner surface of the reformer tube wall.

The inventors have discovered that hot-banding due to wall carbon formation can be distinguished from hot-banding due to carbon formation on and/or in the catalyst pellets.

When carbon forms on and/or in the catalyst pellets, the activity of the catalyst pellets decreases. When the activity of the catalyst decreases, the rate of reaction of the process gas decreases. For a given heat flux on the reformer tube, a decreased rate of reaction will result in an increase of process gas temperature since the reforming reaction is endothermic. The reaction of the process gas is not absorbing as much heat, resulting in an increase in process gas temperature. As the process gas temperature inside the tube increases, the reformer tube wall temperature correspondingly increases for the given heat flux.

The basic heat transfer equation, $q = h \times (T_{wall} - T_{gas})$, where $q$ is the heat flux, $h$ is an overall heat transfer coefficient, $T_{wall}$ is the wall temperature, and $T_{gas}$ is the process gas temperature can be rewritten to express the wall temperature in terms of the other terms as $T_{all} = T_{gas} + q / h$. The heat flux and the overall heat transfer coefficient can be assumed to remain roughly constant, so the temperature of the reformer tube wall, $T_{wall}$, can be expected to increase as the process gas temperature, $T_{gas}$ increases.

When carbon is formed on the wall of the catalyst-containing reformer tube, the activity of the catalyst pellets remains unchanged and the reaction rate of the process gas remains relatively unchanged for a given heat flux. The temperature of the wall will increase due to the increased thermal resistance caused by the carbon on the inner wall of the reformer tube. The temperature of the process gas will be about the same or may slightly decrease, while the reformer tube wall temperature will substantially increase when hot-banding is caused by wall carbon formation.

From the basic heat transfer equation, $T_{wall} = T_{gas} + q / h$, as the thermal resistance increases due to carbon formation on the inner wall of the reformer tube (overall heat transfer coefficient, $h$, decreases), the reformer tube wall temperature is expected to increase.

The differences in the temperature responses due to the different mechanisms can be readily recognized.

A systematic approach may be undertaken to determine the steam flow rate for carbon formation on the inner wall of the catalyst-containing reformer tube.

The sequence of temperatures of the process gas which are measured may comprise multiple subsequences including a first subsequence and a second subsequence, and the sequence of temperatures on the outer wall which are measured may comprise multiple subsequences including a first subsequence and a second subsequence.

A "subsequence" is a sequence that is part of another sequence.

The first subsequence of temperatures of the process gas may be measured at the first location inside the catalyst-containing reformer tube during a first time period when a first quantity of the reformer feed gas mixture is introduced into the catalyst-containing reformer tube. The first quantity of the reformer feed gas mixture may have a steam-to-carbon molar ratio with a first mean value. The first mean value of the steam-to-carbon molar ratio is selected to be greater than a critical value for wall carbon formation.

The steam-to-carbon molar ratio is defined as the flow rate of steam on a molar basis divided by the molar flow rate of hydrocarbon-based carbon on a molar basis.

The first subsequence of temperatures on the outer wall of the catalyst-containing reformer tube may be measured at the second location during the first time period when the first quantity of the reformer feed gas mixture is introduced into the catalyst-containing reformer tube.

During the first time period, since the first mean value of the steam-to-carbon molar ratio is greater than the critical value for wall carbon formation, the first subsequence of temperatures on the outer wall of the catalyst-containing reformer tube exceed the first subsequence of temperatures of the process gas by an amount indicative of no carbon formation on the inner wall segment of the catalyst-containing reformer tube, and the first subsequence of temperatures of the process gas are within a range indicative of no carbon formation on the inner wall segment of the catalyst-containing reformer tube. The difference between the temperature of the outer wall of catalyst-containing reformer tube and the process gas which is indicative of no carbon formation will depend upon a number of factors including the hydrogen production rate, hydrocarbon feedstock composition, and variations in fuel composition.

The steam-to-carbon molar ratio may be systematically decreased until a second mean value of the steam-to-carbon molar ratio is reached where carbon is formed on the inner wall of the reformer tube, i.e. at or below the so-called critical value of the steam-to-carbon molar ratio. The second subsequence of temperatures of the process gas and the second subsequence of temperatures on the outer wall of the catalyst-containing reformer tube are measured when the steam-to-carbon molar ratio is at or below the critical steam-to-carbon molar ratio and are measured during a second time period when a second quantity of the reformer feed gas mixture is introduced into the catalyst-containing reformer tube. During the second time period, since the second mean value of the steam-to-carbon molar ratio is at or below the critical value for wall carbon formation, the second subsequence of temperatures on the outer wall of the catalyst-containing reformer tube exceed the second subsequence of temperatures of the process gas by an amount indicative of carbon formation on the inner wall segment of the catalyst-containing reformer tube, and the second subsequence of temperatures of the process gas are within a range indicative of carbon formation on the inner wall segment of the catalyst-containing reformer tube. The difference between the temperature of the outer wall of catalyst-containing reformer tube and the process gas which is indicative of carbon formation will depend upon a number of factors including the hydrogen production rate, hydrocarbon feedstock composition, and variations in fuel composition. As mentioned before, the temperature of the process gas may be about the same or may slightly decrease, while the reformer tube wall temperature will substantially increase when hot-banding is caused by wall carbon formation. The second subsequence of temperatures of the process gas may accordingly be within the range indicative of no carbon formation on the inner wall segment of the catalyst-containing reformer tube during the first time period.

After determining the steam flow rate at which carbon forms for a given hydrogen production rate, the method comprises controlling the steam flow rate relative to the hydrocarbon-based carbon flow rate responsive to determining the steam flow rate at which carbon forms on the inner wall segment of the catalyst-containing reformer tube 202.

The steam flow rate may be controlled to provide the lowest steam necessary to operate with some carbon formation on the inner surface of the reformer tube or slightly greater so that no carbon is formed on the inner surface of the reformer tube.

The steam flow rate, $S_{Op}$, may be controlled to stay in a range from $0.9 * S_{critical}$ to $1.1 * S_{critical}$, preferably from $0.95 * S_{critical}$ to $1.05 * S_{critical}$.

The steam flow rate, $S_{Op}$, may be controlled to be greater than the steam flow rate, $S_{det}$, at which carbon forms on the inner wall segment of the catalyst-containing reformer tube (202) so that less or no carbon is formed on the inner wall segment of the reformer tube (202) at the steam flow rate, $S_{Op}$.

The propensity for carbon formation in or on the catalyst as described in WO 2013/002752 may also be determined and the steam flow rate controlled responsive to both mechanisms for carbon formation.

Subsequent to systematically determining the critical steam flow rate in the first time period and the second time period, the steam flow rate may be controlled during a subsequent third time period when a third quantity of the reformer feed gas mixture is introduced into the catalyst-containing reformer tube. The third quantity of the reformer feed gas mixture may have a steam-to-carbon molar ratio with a third mean value, where the third mean value is greater than or equal to the second mean value and less than or equal to the second mean value plus 0.2.

The steam flow rate, $S_{det}$, at which carbon forms on the inner wall segment of the catalyst-containing reformer tube (202) and the hydrocarbon-based carbon flow rate, $C$, may define a critical steam-to-carbon molar ratio, $\left(\frac{S}{C}\right)_{critical}$. The steam flow rate, $S_{op}$, may be controlled responsive to determining the steam flow rate, $S_{det}$, at which carbon forms on the inner wall segment of the catalyst-containing reformer tube (202) so that the reformer feed gas mixture has a steam-to-carbon molar ratio, $\left(\frac{S}{C}\right)_{op}$, where

$$\left(\frac{S}{C}\right)_{critical} \leq \left(\frac{S}{C}\right)_{op} \leq \left(\frac{S}{C}\right)_{critical} + 0.2.$$

$\left(\frac{S}{C}\right)_{op}$ is $S_{op}$ divided by the hydrocarbon-based carbon flow rate, $C$.

Operating with the minimum amount of steam provides improved energy efficiency for the steam-hydrocarbon reforming process.

In order to produce a hydrogen-containing product gas, the method may further comprise separating a pressure swing adsorption unit feed 81 in a pressure swing adsorption unit 501 to form the hydrogen-containing product gas 30 and a pressure swing adsorption unit by-product gas 82, where the adsorption unit feed 81 is formed from at least a portion of the reformate 25 from the catalyst-containing tube 202 and where the fuel 35, 82 comprises at least a portion of the pressure swing adsorption unit by-product gas 82.

Example

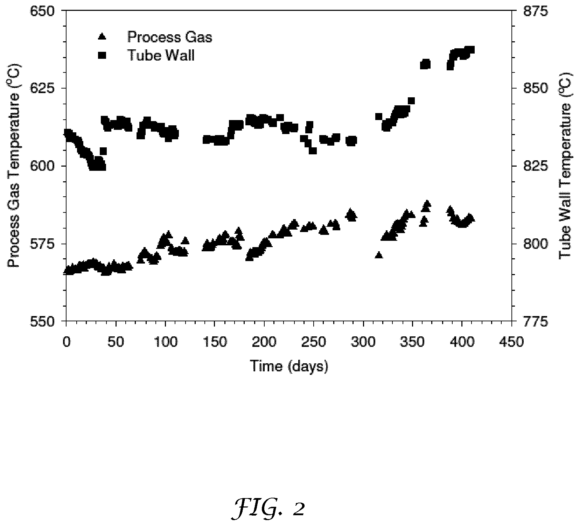

FIG. 2 shows temperature data acquired from an operating reformer furnace. The temperature of the process gas inside the catalyst-containing reformer tube was measured using a Daily Thermetrics' CatTracker® probe and the tube wall temperature was measured using a fixed optical pyrometer. The process gas temperature and the tube wall temperature are plotted versus time.

The process gas data is represented by triangles and the tube wall temperatures by squares. The y-axis for the process gas temperatures is on the left side of the graph and the y-axis for the tube wall temperatures is on the right side of the graph. Time, in days, is plotted on the x-axis.

Over a period of months, the steam-to-carbon molar ratio was systematically decreased.

From day 1 to day 350, the process gas temperature rose somewhat steadily from a temperature of about 565°C to about 585°C, while the tube wall temperature varied within a temperature range from about 825°C to about 845°C. At about day 360, the tube wall temperature increased significantly, about 18°C, while the process gas temperature remained about the same or decreased slightly thereby indicating the presence of tube wall carbon.

Before carbon formed on the tube wall, about days 320 to 340 the temperature difference between the tube wall and the process gas was about 260°C. After carbon formed on the tube wall, about days 360 to 410, the temperature difference between the tube wall and the process gas was about 280 to 283°C.

The target steam-to-carbon molar ratio can then be set and the steam flow rate controlled responsive to determining the steam flow rate where wall carbon is formed.

**Claims**

1. A method of operating a catalytic steam-hydrocarbon reformer, the method comprising:

   introducing a reformer feed gas mixture (15) comprising at least one hydrocarbon and steam into a catalyst-containing reformer tube (202) in a reformer furnace (201), the reformer feed gas mixture (15) having a hydrocarbon-based carbon flow rate, $C$, and a steam flow rate, $S_{op}$, where the steam flow rate, $S_{op}$, relative to the hydrocarbon-based carbon flow rate, $C$, in the reformer feed gas mixture can be changed, reacting the reformer feed gas mixture (15) in a reforming reaction under reaction conditions effective to form a reformate (25) comprising $H_2$, CO, $CH_4$, and $H_2O$ wherein the reformer feed gas mixture (15) is reacted as a process gas in the catalyst-containing reformer tube (202), and withdrawing the reformate (25) from the catalyst-containing tube (202);
   combusting a fuel (35, 82) with an oxidant gas (99) in a combustion section (203) of the reformer furnace (201) external to the catalyst-containing reformer tube (202) under conditions effective to combust the fuel (35, 82) to form a combustion product gas (100) and generate heat to supply energy for reacting the reformer feed gas mixture (15) inside the catalyst-containing reformer tube (202), and withdrawing the combustion product gas (100) from the combustion section (203);
   determining a steam flow rate, $S_{det}$, at which carbon forms on an inner wall segment of the catalyst-containing reformer tube (202) at a first hydrogen production rate wherein determining the steam flow rate, $S_{det}$, comprises:
   measuring a temperature of the process gas at a first location inside the catalyst-containing reformer tube (202) proximate the inner wall segment;

   measuring a temperature on an outer wall of the catalyst-containing reformer tube (202) at a second location proximate the inner wall segment; and
   evaluating the temperature of the process gas at the first location and the temperature on the outer wall at the second location for temperatures indicative of carbon formation on the inner wall segment of the catalyst-containing reformer tube (202)
   wherein the temperatures indicative of carbon formation on the inner wall segment of the catalyst-containing reformer tube (202) comprise a wall temperature exceeding a process gas temperature by greater than a selected difference while the process gas temperature is less than a selected value; and
   controlling the steam flow rate, $S_{op}$, responsive to determining the steam flow rate, $S_{det}$, at which carbon forms on the inner wall segment of the catalyst-containing reformer tube (202)
   wherein the steam flow rate, $S_{op}$, is controlled to be greater than the steam flow rate, $S_{det}$, at which carbon forms on the inner wall segment of the catalyst-containing reformer tube (202) so that less or no carbon is formed on the inner wall segment of the reformer tube (202) at the steam flow rate, $S_{op}$.

2. The method of claim 1 wherein the steam flow rate, $S_{det}$, at which carbon forms is a critical steam flow rate, $S_{critical}$, for wall-carbon formation, namely, a highest steam flow rate at which carbon forms on the inner wall segment of the catalyst-containing reformer tube (202) at the first hydrogen production rate.

3. The method of claim 2 wherein the steam flow rate, $S_{op}$, is controlled to stay in a range from $0.9 * S_{critical}$ to $1.1 * S_{critical}$, preferably from $0.95 * S_{critical}$ to $1.05 * S_{critical}$.

4. The method of any one of the preceding claims wherein the steam flow rate, $S_{det}$, at which carbon forms on the inner wall segment of the catalyst-containing reformer tube (202) and the hydrocarbon-based carbon flow rate, C, define a critical steam-to-carbon molar ratio, $\left(\frac{S}{C}\right)_{critical}$; and
   wherein the steam flow rate, $S_{op}$, responsive to determining the steam flow rate, $S_{det}$, at which carbon forms on the inner wall segment of the catalyst-containing reformer tube (202) is controlled so that the reformer feed gas mixture has a steam-to-carbon molar ratio, $\left(\frac{S}{C}\right)_{op}$, where

$$\left(\frac{S}{C}\right)_{critical} \leq \left(\frac{S}{C}\right)_{op} \leq \left(\frac{S}{C}\right)_{critical} + 0.2$$

5. The method of any one of the preceding claims wherein the steam flow rate, $S_{det}$, is greater than an amount sufficient to avoid decreased activity of the catalyst due to carbon forming on the catalyst.

6. The method of any one of the preceding claims wherein determining the steam flow rate, $S_{det}$, at which carbon forms on an inner wall segment of the catalyst-containing reformer tube (202) comprises:

   determining a first steam flow rate, $S_1$, at which carbon forms on an inner wall segment of the catalyst-containing reformer tube (202) at the first hydrogen production rate; and

   determining a second steam flow rate, $S_2$, at which carbon forms on the inner wall segment of the catalyst-containing reformer tube (202) at the first hydrogen production rate, the second steam flow rate, $S_2$, being greater than the first steam flow rate, $S_1$;

   wherein the first steam flow rate, $S_1$, and the second steam flow rate, $S_2$, are greater than an amount sufficient to avoid decreased activity of the catalyst due to carbon forming on the catalyst; and

   wherein controlling the steam flow rate, $S_{op}$, comprises controlling the steam flow rate, $S_{op}$, to be equal to or greater than the second steam flow rate, $S_2$.

7. The method of any one of the preceding claims wherein the reformer feed gas mixture (15) is reacted as a process gas in the catalyst-containing reformer tube (202); and

   wherein the step of determining the steam flow rate at which carbon forms on the inner wall segment of the catalyst-containing reformer tube (202) comprises:

   varying the steam flow rate relative to the hydrocarbon-based carbon flow rate;

   measuring a sequence of temperatures of the process gas at a first location inside the catalyst-containing reformer tube (202) proximate the inner wall segment responsive to changes in the steam flow rate relative to the hydrocarbon-based carbon flow rate;

   measuring a sequence of temperatures on an outer wall of the catalyst-containing reformer tube (202) at a second location proximate the inner wall segment responsive to the changes in the steam flow rate relative to the hydrocarbon-based carbon flow rate;

   wherein the sequence of temperatures of the process gas at the first location and the sequence of temperatures on the outer wall at the second location at the various steam flow rates include temperatures indicative of carbon formation on the inner wall segment of the catalyst-containing reformer tube and temperatures not indicative of carbon formation on the inner wall segment of the catalyst-containing reformer tube, the temperatures indicative of carbon formation having steam flow rates corresponding therewith, and the temperatures not indicative of carbon formation having steam flow rates corresponding therewith; and

   screening the sequence of temperatures of the process gas at the first location and the sequence of temperatures on the outer wall at the second location at various steam flow rates for temperatures indicative of carbon formation on the inner wall segment of the catalyst-containing reformer tube (202) to determine the steam flow rate, $S_{det}$, at which carbon forms on the inner wall segment of the catalyst-containing reformer tube (202).

8. The method of claim 7 wherein the steam flow rates corresponding to the temperatures indicative of carbon formation on the inner wall segment of the catalyst-containing reformer tube include two or more steam flow rates; and wherein the highest of the two or more steam flow rates is determined to be the steam flow rate, $S_{det}$.

9. The method of claim 7 or claim 8 wherein the first location and the second location are within a distance one from the other of at most 0.5 m and/or at most 10% of the length of the catalyst-containing reformer tube.

10. The method of the proceeding claim wherein the first location and the second location are within a distance one from the other of at most 0.3 m and/or at most 5% of the length of the catalyst-containing reformer tube.

11. The method of any one of the claims 7 to 10 wherein a first subsequence of temperatures of the process gas is measured at the first location inside the catalyst-containing reformer tube (202) during a first time period when a first quantity of the reformer feed gas mixture (15) is introduced into the catalyst-containing reformer tube (202), the first quantity of the reformer feed gas mixture (15) having a steam-to-carbon molar ratio with a first mean value, the sequence of temperatures of the process gas comprising the first subsequence of temperatures of the process gas;

wherein a first subsequence of temperatures on the outer wall of the catalyst-containing reformer tube (202) is measured at the second location during the first time period when the first quantity of the reformer feed gas mixture (15) is introduced into the catalyst-containing reformer tube (202), the sequence of temperatures on the outer wall comprising the first subsequence of temperatures on the outer wall;

wherein during the first time period, the first subsequence of temperatures on the outer wall of the catalyst-containing reformer tube (202) exceed the first subsequence of temperatures of the process gas by an amount indicative of no carbon formation on the inner wall segment of the catalyst-containing reformer tube (202), and the first subsequence of temperatures of the process gas are within a range indicative of no carbon formation on the inner wall segment of the catalyst-containing reformer tube (202);

wherein a second subsequence of temperatures of the process gas is measured at the first location inside the catalyst-containing reformer tube (202) during a second time period when a second quantity of the reformer feed gas mixture (15) is introduced into the catalyst-containing reformer tube (202), the second quantity of the reformer feed gas mixture (15) having a steam-to-carbon molar ratio with a second mean value, the second mean value less than the first mean value, the sequence of temperatures of the process gas comprising the second subsequence of temperatures of the process gas;

wherein a second subsequence of temperatures on the outer wall of the catalyst-containing reformer tube (202) is measured at the second location during the second time period when the second quantity of the reformer feed gas mixture (15) is introduced into the catalyst-containing reformer tube (202), the sequence of temperatures on the outer wall comprising the second subsequence of temperatures on the outer wall; and

wherein during the second time period, the second subsequence of temperatures on the outer wall of the catalyst-containing reformer tube (202) exceed the second subsequence of temperatures of the process gas by an amount indicative of carbon formation on the inner wall segment of the catalyst-containing reformer tube (202), and the second subsequence of temperatures of the process gas are within a range indicative of carbon formation on the inner wall segment of the catalyst-containing reformer tube (202) thereby determining the steam flow rate at which carbon forms on the inner wall segment of the catalyst-containing reformer tube (202).

12. The method of claim 11 wherein the steam flow rate is controlled in the step of controlling the steam flow rate during a third time period when a third quantity of the reformer feed gas mixture (15) is introduced into the catalyst-containing reformer tube (202), the third quantity of the reformer feed gas mixture (15) having a steam-to-carbon molar ratio with a third mean value, where the third mean value is greater than or equal to the second mean value and less than or equal to the second mean value plus 0.2.

13. The method of any one of the preceding claims further comprising:
separating a pressure swing adsorption unit feed in a pressure swing adsorption unit (501) to form a hydrogen-containing product gas (30) and a pressure swing adsorption unit by-product gas (82), where the adsorption unit feed is formed from at least a portion of the reformate (25) from the catalyst-containing tube and where the fuel comprises at least a portion of the pressure swing adsorption unit by-product gas.

**Patentansprüche**

1. Verfahren zum Betreiben eines katalytischen Dampf-Kohlenwasserstoff-Reformers, das folgende Schritte umfasst:

eine Reformer-Beschickungsgasmischung (15), die wenigstens einen Kohlenwasserstoff und Dampf umfasst, wird in ein katalysatorhaltiges Reformerrohr (202) in einem Reformerofen (201) eingebracht, wobei die Reformer-Beschickungsgasmischung (15) eine kohlenwasserstoffbasierte Kohlenstoff-Flussrate C und eine Dampf-Flussrate $S_{op}$ aufweist, wobei die Dampf-Flussrate $S_{op}$ relativ zur kohlenwasserstoffbasierten Kohlenstoff-Flussrate $C$ in der Reformer-Beschickungsgasmischung veränderbar ist; die Reformer-Beschickungsgasmischung (15) wird in einer Reformierungsreaktion unter Reaktionsbedingungen reagiert, die die Bildung eines Reformats (25) bewirken, das $H_2$, CO, $CH_4$ und $H_2O$ umfasst, wobei die Reformer-Beschickungsgasmischung (15) als Prozessgas im katalysatorhaltigen Reformerrohr (202) reagiert wird; und das Reformat (25) wird dem katalysatorhaltigen Rohr (202) entzogen;
ein Brennstoff (35, 82) wird in einem Verbrennungsbereich (203) des Reformerofens (201) außerhalb des katalysatorhaltigen Reformerrohrs (202) mit einem Oxidationsgas (99) unter Bedingungen verbrannt, die die Verbrennung des Brennstoffs (35, 82) zur Bildung eines Verbrennungsproduktgases (100) und zur Erzeugung von Wärme bewirken, um Energie zur Reaktion der Reformer-Beschickungsgasmischung (15) innerhalb des katalysatorhaltigen Reformerrohrs (202) zu liefern; und das Verbrennungsproduktgas (100) wird dem Verbrennungsbereich (203) entzogen;

eine Dampf-Flussrate $S_{det}$ wird bestimmt, bei der sich Kohlenstoff an einem Innenwandungsabschnitt des katalysatorhaltigen Reformerrohrs (202) bei einer ersten Wasserstoffproduktionsrate bildet, wobei die Bestimmung der Dampf-Flussrate $S_{det}$ folgende Schritte umfasst:

eine Temperatur des Prozessgases wird an einer ersten Stelle innerhalb des katalysatorhaltigen Reformerrohrs (202), die nahe dem Innenwandungsabschnitt liegt, gemessen;

eine Temperatur wird an einer Außenwandung des katalysatorhaltigen Reformerrohrs (202) an einer zweiten Stelle, die nahe dem Innenwandungsabschnitt liegt, gemessen; und

die Temperatur des Prozessgases an der ersten Stelle und die Temperatur an der Außenwandung an der zweiten Stelle werden auf Temperaturen überprüft, die auf eine Kohlenstoffbildung an dem Innenwandungsabschnitt des katalysatorhaltigen Reformerrohrs (202) hindeuten,

wobei die Temperaturen, die auf eine Kohlenstoffbildung an dem Innenwandungsabschnitt des katalysatorhaltigen Reformerrohrs (202) hindeuten, eine Wandungstemperatur umfassen, die eine Prozessgastemperatur um mehr als eine ausgewählte Differenz übersteigt, während die Prozessgastemperatur geringer ist als ein ausgewählter Wert, und

die Dampf-Flussrate $S_{op}$, die auf die Bestimmung der Dampf-Flussrate $S_{det}$ reagiert, bei der sich Kohlenstoff an dem Innenwandungsabschnitt des katalysatorhaltigen Reformerrohrs (202) bildet, wird gesteuert,

wobei die Dampf-Flussrate $S_{op}$ so gesteuert wird, dass sie größer ist als die Dampf-Flussrate $S_{det}$, bei der sich Kohlenstoff an dem Innenwandungsabschnitt des katalysatorhaltigen Reformerrohrs (202) bildet, damit sich weniger oder kein Kohlenstoff an dem Innenwandungsabschnitt des Reformerrohrs (202) bei der Dampf-Flussrate $S_{op}$ bildet.

2. Verfahren nach Anspruch 1, wobei die Dampf-Flussrate $S_{det}$, bei der sich Kohlenstoff bildet, eine für die Wandungskohlenstoffbildung kritische Dampf-Flussrate $S_{critical}$ ist, d.h. eine höchste Dampf-Flussrate, bei der sich Kohlenstoff an dem Innenwandungsabschnitt des katalysatorhaltigen Reformerrohrs (202) bei der ersten Wasserstoffproduktionsrate bildet.

3. Verfahren nach Anspruch 2, wobei die Dampf-Flussrate $S_{op}$ so gesteuert wird, dass sie in einem Bereich von $0{,}9 * S_{critical}$ bis $1{,}1 * S_{critical}$, bevorzugt von $0{,}95 * S_{critical}$ bis $1{,}05 * S_{critical}$, bleibt.

4. Verfahren nach einem der vorhergehenden Ansprüche, wobei die Dampf-Flussrate $S_{det}$, bei der sich Kohlenstoff an dem Innenwandungsabschnitt des katalysatorhaltigen Reformerrohrs (202) bildet, und die kohlenwasserstoffbasierte Kohlenstoff-Flussrate $C$ ein kritisches Dampf-Kohlenstoff-Molverhältnis $\left(\frac{s}{c}\right)_{critical}$ definieren, und wobei die Dampf-Flussrate $S_{op}$, die auf die Bestimmung der Dampf-Flussrate $S_{det}$ reagiert, bei der sich Kohlenstoff an dem Innenwandungsabschnitt des katalysatorhaltigen Reformerrohrs (202) bildet, gesteuert wird, damit die Reformer-Beschickungsgasmischung (15) ein Dampf-Kohlenstoff-Molverhältnis $\left(\frac{s}{c}\right)_{op}$ aufweist, wobei

$$\left(\frac{s}{c}\right)_{critical} \leq \left(\frac{s}{c}\right)_{op} \leq \left(\frac{s}{c}\right)_{critical} + 0{,}2.$$

5. Verfahren nach einem der vorhergehenden Ansprüche, wobei die Dampf-Flussrate $S_{det}$ größer ist als eine Menge, die dazu ausreicht, eine aufgrund von sich am Katalysator bildendem Kohlenstoff verminderte Aktivität des Katalysators zu vermeiden.

6. Verfahren nach einem der vorhergehenden Ansprüche, wobei die Bestimmung der Dampf-Flussrate $S_{det}$, bei der sich Kohlenstoff an einem Innenwandungsabschnitt des katalysatorhaltigen Reformerrohrs (202) bildet, folgende Schritte umfasst:

eine erste Dampf-Flussrate $S_1$ wird bestimmt, bei der sich Kohlenstoff an einem Innenwandungsabschnitt des katalysatorhaltigen Reformerrohrs (202) bei der ersten Wasserstoffproduktionsrate bildet; und

eine zweite Dampf-Flussrate $S_2$ wird bestimmt, bei der sich Kohlenstoff an dem Innenwandungsabschnitt des katalysatorhaltigen Reformerrohrs (202) bei der ersten Wasserstoffproduktionsrate bildet, wobei die zweite Dampf-Flussrate $S_2$ größer ist als die erste Dampf-Flussrate $S_1$,

wobei die erste Dampf-Flussrate $S_1$ und die zweite Dampf-Flussrate $S_2$ größer sind als eine Menge, die dazu ausreicht, eine aufgrund von sich am Katalysator bildendem Kohlenstoff verminderte Aktivität des Katalysators zu vermeiden, und

wobei bei der Steuerung der Dampf-Flussrate $S_{op}$ die Dampf-Flussrate $S_{op}$ so gesteuert wird, dass sie gleich oder größer ist als die zweite Dampf-Flussrate $S_2$.

7. Verfahren nach einem der vorhergehenden Ansprüche, wobei die Reformer-Beschickungsgasmischung (15) als Prozessgas im katalysatorhaltigen Reformerrohr (202) reagiert wird, und

wobei der Schritt, bei dem die Dampf-Flussrate, bei der sich Kohlenstoff an dem Innenwandungsabschnitt des katalysatorhaltigen Reformerrohrs (202) bildet, bestimmt wird, folgende Schritte umfasst:

die Dampf-Flussrate wird relativ zur kohlenwasserstoffbasierten Kohlenstoff-Flussrate variiert;

eine Abfolge von Temperaturen des Prozessgases wird an einer ersten Stelle innerhalb des katalysatorhaltigen Reformerrohrs (202), die nahe dem Innenwandungsabschnitt liegt, in Reaktion auf Veränderungen der Dampf-Flussrate relativ zur kohlenwasserstoffbasierten Kohlenstoff-Flussrate gemessen;

eine Abfolge von Temperaturen wird an einer Außenwandung des katalysatorhaltigen Reformerrohrs (202) an einer zweiten Stelle, die nahe dem Innenwandungsabschnitt liegt, in Reaktion auf die Veränderungen der Dampf-Flussrate relativ zur kohlenwasserstoffbasierten Kohlenstoff-Flussrate gemessen,

wobei die Abfolge von Temperaturen des Prozessgases an der ersten Stelle und die Abfolge von Temperaturen an der Außenwandung an der zweiten Stelle bei den verschiedenen Dampf-Flussraten Temperaturen, die auf eine Kohlenstoffbildung an dem Innenwandungsabschnitt des katalysatorhaltigen Reformerrohrs hindeuten, und Temperaturen, die auf keine Kohlenstoffbildung an dem Innenwandungsabschnitt des katalysatorhaltigen Reformerrohrs hindeuten, umfassen, wobei die auf eine Kohlenstoffbildung hindeutenden Temperaturen dementsprechende Dampf-Flussraten aufweisen und die auf keine Kohlenstoffbildung hindeutenden Temperaturen dementsprechende Dampf-Flussraten aufweisen; und

die Abfolge von Temperaturen des Prozessgases an der ersten Stelle und die Abfolge von Temperaturen an der Außenwandung an der zweiten Stelle bei verschiedenen Dampf-Flussraten werden auf Temperaturen überprüft, die auf eine Kohlenstoffbildung an dem Innenwandungsabschnitt des katalysatorhaltigen Reformerrohrs (202) hindeuten, um die Dampf-Flussrate $S_{det}$, bei der sich Kohlenstoff an dem Innenwandungsabschnitt des katalysatorhaltigen Reformerrohrs (202) bildet, zu bestimmen.

8. Verfahren nach Anspruch 7, wobei die Dampf-Flussraten, die den Temperaturen entsprechen, die auf eine Kohlenstoffbildung an dem Innenwandungsabschnitt des katalysatorhaltigen Reformerrohrs hindeuten, zwei oder mehr Dampf-Flussraten umfassen, und wobei die höchste der zwei oder mehr Dampf-Flussraten als die Dampf-Flussrate $S_{det}$ bestimmt wird.

9. Verfahren nach Anspruch 7 oder Anspruch 8, wobei der Abstand der ersten Stelle und der zweiten Stelle zueinander höchstens 0,5 m und/oder höchstens 10% der Länge des katalysatorhaltigen Reformerrohrs beträgt.

10. Verfahren nach dem vorhergehenden Anspruch, wobei der Abstand der ersten Stelle und der zweiten Stelle zueinander höchstens 0,3 m und/oder höchstens 5% der Länge des katalysatorhaltigen Reformerrohrs beträgt.

11. Verfahren nach einem der Ansprüche 7 bis 10, wobei eine erste Teilfolge von Temperaturen des Prozessgases an der ersten Stelle innerhalb des katalysatorhaltigen Reformerrohrs (202) während einer ersten Zeitdauer gemessen wird, in der eine erste Menge der Reformer-Beschickungsgasmischung (15) in das katalysatorhaltige Reformerrohr (202) eingebracht wird, wobei die erste Menge der Reformer-Beschickungsgasmischung (15) ein Dampf-Kohlenstoff-Molverhältnis aufweist, das einen ersten Mittelwert aufweist, wobei die Abfolge von Temperaturen des Prozessgases die erste Teilfolge von Temperaturen des Prozessgases umfasst,

wobei eine erste Teilfolge von Temperaturen an der Außenwandung des katalysatorhaltigen Reformerrohrs (202) an der zweiten Stelle während der ersten Zeitdauer gemessen wird, in der die erste Menge der Reformer-Beschickungsgasmischung (15) in das katalysatorhaltige Reformerrohr (202) eingebracht wird, wobei die Abfolge von Temperaturen an der Außenwandung die erste Teilfolge von Temperaturen an der Außenwandung umfasst,

wobei während der ersten Zeitdauer die erste Teilfolge von Temperaturen an der Außenwandung des katalysatorhaltigen Reformerrohrs (202) die erste Teilfolge von Temperaturen des Prozessgases um eine Menge übersteigt, die auf keine Kohlenstoffbildung an dem Innenwandungsabschnitt des katalysatorhaltigen Reformerrohrs (202) hindeutet, und die erste Teilfolge von Temperaturen des Prozessgases innerhalb eines Bereichs liegt, der auf keine Kohlenstoffbildung an dem Innenwandungsabschnitt des katalysatorhaltigen Reformerrohrs (202) hindeutet,

wobei eine zweite Teilfolge von Temperaturen des Prozessgases an der ersten Stelle innerhalb des katalysatorhaltigen Reformerrohrs (202) während einer zweiten Zeitdauer gemessen wird, in der eine zweite Menge der Reformer-Beschickungsgasmischung (15) in das katalysatorhaltige Reformerrohr (202) eingebracht wird, wobei die zweite Menge der Reformer-Beschickungsgasmischung (15) ein Dampf-Kohlenstoff-Molverhältnis aufweist, das einen zweiten Mittelwert aufweist, wobei der zweite Mittelwert geringer ist als der erste Mittelwert, wobei die Abfolge von Temperaturen des Prozessgases die zweite Teilfolge von Temperaturen des Prozessgases umfasst,

wobei eine zweite Teilfolge von Temperaturen an der Außenwandung des katalysatorhaltigen Reformerrohrs (202) an der zweiten Stelle während der zweiten Zeitdauer gemessen wird, in der die zweite Menge der Reformer-Beschickungsgasmischung (15) in das katalysatorhaltige Reformerrohr (202) eingebracht wird, wobei die Abfolge von Temperaturen an der Außenwandung die zweite Teilfolge von Temperaturen an der Außenwandung umfasst, und wobei während der zweiten Zeitdauer die zweite Teilfolge von Temperaturen an der Außenwandung des katalysatorhaltigen Reformerrohrs (202) die zweite Teilfolge von Temperaturen des Prozessgases um eine Menge übersteigt, die auf eine Kohlenstoffbildung an dem Innenwandungsabschnitt des katalysatorhaltigen Reformerrohrs (202) hindeutet, und die zweite Teilfolge von Temperaturen des Prozessgases innerhalb eines Bereichs liegt, der auf eine Kohlenstoffbildung an dem Innenwandungsabschnitt des katalysatorhaltigen Reformerrohrs (202) hindeutet, wodurch die Dampf-Flussrate bestimmt wird, bei der sich Kohlenstoff an dem Innenwandungsabschnitt des katalysatorhaltigen Reformerrohrs (202) bildet.

12. Verfahren nach Anspruch 11, wobei die Dampf-Flussrate in dem Schritt gesteuert wird, bei dem die Dampf-Flussrate während einer dritten Zeitdauer gesteuert wird, in der eine dritte Menge der Reformer-Beschickungsgasmischung (15) in das katalysatorhaltige Reformerrohr (202) eingebracht wird, wobei die dritte Menge der Reformer-Beschickungsgasmischung (15) ein Dampf-Kohlenstoff-Molverhältnis aufweist, das einen dritten Mittelwert aufweist, wobei der dritte Mittelwert größer oder gleich dem zweiten Mittelwert und geringer oder gleich dem zweiten Mittelwert plus 0,2 ist.

13. Verfahren nach einem der vorhergehenden Ansprüche, das ferner folgende Schritte umfasst: in einer Druckwechseladsorptionseinheit (501) wird eine Beschickung der Druckwechseladsorptionseinheit getrennt, um ein wasserstoffhaltiges Produktgas (30) und ein Nebenproduktgas (82) der Druckwechseladsorptionseinheit zu bilden, wobei die Beschickung der Adsorptionseinheit aus wenigstens einem Teil des Reformats (25) aus dem katalysatorhaltigen Rohr gebildet wird, und wobei der Brennstoff wenigstens einen Teil des Nebenproduktgases der Druckwechseladsorptionseinheit umfasst.

**Revendications**

1. Un procédé de fonctionnement d'un reformeur catalytique à vapeur d'hydrocarbures, le procédé comprenant:

l'introduction d'un mélange de gaz d'alimentation d'un reformeur (15) comprenant au moins un hydrocarbure et de la vapeur dans un tube de reformeur contenant un catalyseur (202) dans un four de reformage (201), le mélange de gaz d'alimentation du reformeur (15) ayant un débit de carbone à base d'hydrocarbures, C, et un débit de vapeur, $S_{op}$, le débit de vapeur $S_{op}$ par rapport au débit de carbone à base d'hydrocarbures, C, dans le mélange de gaz d'alimentation du reformeur pouvant être modifié, la mise en réaction du mélange de gaz d'alimentation du reformeur (15) dans une réaction de reformage dans des conditions de réaction propices à former un reformat (25) comprenant $H_2$, CO, $CH_4$ et $H_2O$, le mélange de gaz d'alimentation du reformeur (15) étant mis en réaction comme gaz de processus dans le tube du reformeur contenant un catalyseur (202) et l'extraction du reformat (25) à partir du tube contenant le catalyseur (202) ;
la combustion d'un combustible (35, 82) avec un gaz oxydant (99) dans une section de combustion (203) du four de reformage (201) à l'extérieur du tube du reformeur contenant un catalyseur (202) dans des conditions propices pour la combustion du combustible (35, 82) afin de former un produit gazeux de combustion (100) et de générer une chaleur pour alimenter en énergie la réaction du mélange de gaz d'alimentation du reformeur (15) à l'intérieur du tube du reformeur contenant un catalyseur (202), et l'extraction du produit gazeux de combustion (100) à partir de la section de combustion (203) ;
la détermination d'un débit de vapeur, $S_{det}$, auquel le carbone se forme sur un segment de paroi interne du tube du reformeur contenant un catalyseur (202) à un premier débit de production d'hydrogène,
dans laquel la détermination du débit de vapeur, $S_{det}$, comprend :

la mesure d'une température du gaz de processus à hauteur d'un premier site à l'intérieur du tube du reformeur contenant un catalyseur (202) à proximité du segment de paroi interne ;
la mesure d'une température sur une paroi externe du tube du reformeur contenant un catalyseur (202) à hauteur d'un deuxième site proche du segment de paroi interne ; et
l'évaluation de la température du gaz de processus à hauteur du premier site et la température sur la paroi externe à hauteur du deuxième site pour des températures indicatives de la formation de carbone sur le segment de paroi interne du tube du reformeur contenant un catalyseur (202), dans lequel les températures indicatives de la formation de carbone sur le segment de paroi interne du tube du reformeur contenant un catalyseur (202) comprennent une température de paroi excédant une température du gaz de processus d'une différence supérieure à une différence choisie, tandis que la température du gaz de processus est inférieure à une valeur choisie ; et le contrôle du débit de vapeur, $S_{op}$, en réponse à la détermination du débit de vapeur, $S_{det}$, auquel le carbone se forme sur le segment de paroi interne du tube du reformeur contenant un catalyseur (202),

dans lequel le débit de vapeur, $S_{op}$, est contrôlé pour être supérieur au débit de vapeur, $S_{det}$, auquel le carbone se forme sur le segment de paroi interne du tube du reformeur contenant un catalyseur (202) de manière à ne former que peu, voire pas de carbone sur le segment de paroi interne du tube du reformeur (202) au débit de vapeur, $S_{op}$.

2. Le procédé selon la revendication 1, dans lequel le débit de vapeur, $S_{det}$, auquel le carbone se forme est un débit de vapeur critique, $S_{critical}$, pour la formation de carbone de paroi, à savoir un débit de vapeur maximal auquel le carbone se forme sur le segment de paroi interne du tube du reformeur contenant un catalyseur (202) au premier débit de production d'hydrogène.

3. Le procédé selon la revendication 2, dans lequel le débit de vapeur, $S_{op}$, est réglé pour rester dans une plage de $0,9^*S_{critical}$ à $1,1^*S_{critical}$, de préférence de $0,95^*S_{critical}$ à $1,05^*S_{critical}$.

4. Le procédé selon l'une des revendications précédentes, dans lequel le débit de vapeur, $S_{det}$, auquel le carbone se forme sur le segment de paroi interne du tube du reformeur contenant un catalyseur (202) et le débit de carbone à base d'hydrocarbures, C, définissent un rapport molaire vapeur/carbone critique, $\left(\frac{S}{C}\right)_{critical}$ ; et dans lequel le débit de vapeur, $S_{op}$, en réponse à la détermination du débit de vapeur, $S_{det}$, auquel le carbone se forme sur le segment de paroi interne du tube du reformeur contenant un catalyseur (202) est réglé de telle sorte que le mélange de gaz d'alimentation du reformeur possède un rapport molaire va-

peur/carbone, $\left(\frac{S}{C}\right)_{op}$, avec

$$\left(\frac{S}{C}\right)_{critical} \leq \left(\frac{S}{C}\right)_{op} \leq \left(\frac{S}{C}\right)_{critical} + 0.2 .$$

5. Le procédé selon l'une des revendications précédentes, dans lequel le débit de vapeur, $S_{det}$, est supérieur à un débit suffisant pour éviter une activité réduite du catalyseur en raison de la formation de carbone sur le catalyseur.

6. Le procédé selon l'une des revendications précédentes, dans lequel la détermination du débit de vapeur, $S_{det}$, auquel du carbone se forme sur un segment de paroi interne du tube du reformeur contenant un catalyseur (202) comprend:

   la détermination d'un premier débit de vapeur, $S_1$, auquel du carbone se forme sur un segment de paroi interne du tube du reformeur contenant un catalyseur (202) au premier débit de production d'hydrogène ; et la détermination d'un deuxième débit de vapeur $S_2$, auquel du carbone se forme sur le segment de paroi interne du tube du reformeur contenant un catalyseur (202) au premier débit de production d'hydrogène, le deuxième débit de vapeur $S_2$ étant supérieur au premier débit de vapeur, $S_1$ ; le premier débit de vapeur, $S_1$, et le deuxième débit de vapeur, $S_2$, étant supérieurs à un débit suffisant pour éviter une activité réduite du catalyseur en raison de la formation de carbone sur le catalyseur ; et le réglage du débit de vapeur, $S_{op}$, comprend le réglage du débit de vapeur, $S_{op}$, à une valeur égale ou supérieure au deuxième débit de vapeur, $S_2$.

7. Le procédé selon l'une des revendications précédentes, dans lequel le mélange de gaz d'alimentation du reformeur (15) est mis en réaction en tant que gaz de processus dans le tube du reformeur contenant un catalyseur (202); et dans lequel l'étape de détermination du débit de vapeur auquel le carbone se forme sur le segment de paroi interne du tube du reformeur contenant un catalyseur (202) comprend :

   la variation du débit de vapeur par rapport au débit de carbone à base d'hydrocarbures ; la mesure d'une séquence de températures du gaz de processus à hauteur d'un premier site à l'intérieur du tube du reformeur contenant un catalyseur (202) à proximité du segment de paroi interne en réaction aux changements dans le débit de vapeur par rapport au débit de carbone à base d'hydrocarbures ;

la mesure d'une séquence de températures sur une paroi externe du tube du reformeur contenant un catalyseur (202) à hauteur d'un deuxième site à proximité du segment de paroi interne en réaction aux changements dans le débit de vapeur par rapport au débit de carbone à base d'hydrocarbures ;

dans lequel la séquence de températures du gaz de processus à hauteur du premier site et la séquence de températures sur la paroi externe à hauteur du deuxième site à différents débits de vapeur comprennent des températures indicatives de la formation de carbone sur le segment de paroi interne du tube du reformeur contenant un catalyseur (202) et des températures non indicatives de la formation de carbone sur le segment de paroi interne du tube du reformeur contenant un catalyseur, les températures indicatives de la formation de carbone ayant des débits de vapeur correspondant à cela et les températures non indicatives de la formation de carbone ayant des débits de vapeur correspondant à cela; et

l'analyse de la séquence de températures du gaz de processus à hauteur du premier site et de la séquence de températures sur la paroi externe à hauteur du deuxième site à différents débits de vapeur pour des températures indicatives de la formation de carbone sur le segment de paroi interne du tube du reformeur contenant un catalyseur (202) afin de déterminer le débit de vapeur, $S_{det}$, auquel le carbone se forme sur le segment de paroi interne du tube du reformeur contenant un catalyseur (202).

8. Le procédé selon la revendication 7, dans lequel les débits de vapeur correspondant aux températures indicatives de la formation de carbone sur le segment de paroi interne du tube du reformeur contenant un catalyseur (202) comprennent deux débits de vapeur ou plus; et dans lequel le plus élevé des deux débits de vapeur ou plus est déterminé comme étant le débit de vapeur, $S_{det}$.

9. Le procédé selon l'une des revendications 7 ou 8, dans lequel le premier site et le deuxième site sont espacés d'une distance de 0,5 m maximum et/ou en plus de 10 % de la longueur du tube du reformeur contenant un catalyseur.

10. Le procédé selon la revendication précédente, dans lequel le premier site et le deuxième site sont espacés d'une distance de 0,3 m maximum et/ou en plus de 5 % de la longueur du tube du reformeur contenant un catalyseur.

11. Le procédé selon l'une des revendications 7 à 10, dans lequel une première sous-séquence de températures du gaz de processus est mesurée à hauteur du premier site à l'intérieur du tube du reformeur contenant un catalyseur (202) pendant une première période de temps lorsqu'une première quantité de mélange de gaz d'alimentation du reformeur (15) est introduite dans le tube du reformeur contenant un catalyseur (202), la première quantité du mélange de gaz d'alimentation du reformeur (15) ayant un rapport molaire vapeur/carbone avec une première valeur moyenne, la séquence de températures du gaz de processus comprenant la première sous-séquence de températures du gaz de processus ;

dans lequel une première sous-séquence de températures sur la paroi externe du tube du reformeur contenant un catalyseur (202) est mesurée à hauteur du deuxième site pendant la première période de temps lorsque la première quantité de mélange de gaz d'alimentation du reformeur (15) est introduite dans le tube du reformeur contenant un catalyseur (202), la séquence de températures sur la paroi externe comprenant la première sous-séquence de températures sur la paroi externe ;

dans lequel, pendant la première période de temps, la première sous-séquence de températures sur la paroi externe du tube du reformeur contenant un catalyseur (202) dépasse la première sous-séquence de températures du gaz de processus d'une valeur indicative de l'absence de formation de carbone sur le segment de paroi interne du tube du reformeur contenant un catalyseur (202) et la première sous-séquence de températures du gaz de processus se situe dans une plage indicative de l'absence de formation de carbone sur le segment de paroi interne du tube du reformeur contenant un catalyseur (202) ;

dans lequel une deuxième sous-séquence de températures du gaz de processus est mesurée à hauteur du premier site à l'intérieur du tube du reformeur contenant un catalyseur (202) pendant une deuxième période de temps lorsqu'une deuxième quantité de mélange de gaz d'alimentation du reformeur (15) est introduite dans le tube du reformeur contenant un catalyseur (202), la deuxième quantité du mélange de gaz d'alimentation du reformeur (15) ayant un rapport molaire vapeur/carbone avec une deuxième valeur moyenne, la deuxième valeur moyenne étant inférieure à la première valeur moyenne, la séquence de températures du gaz de processus comprenant la deuxième sous-séquence de températures du gaz de processus ;

dans lequel une deuxième sous-séquence de températures sur la paroi externe du tube du reformeur contenant un catalyseur (202) est mesurée à hauteur du deuxième site pendant la deuxième période de temps lorsque la deuxième quantité de mélange de gaz d'alimentation du reformeur (15) est introduite dans le tube du reformeur contenant un catalyseur (202), la séquence de températures sur la paroi externe comprenant la deuxième sous-séquence de températures sur la paroi externe ; et

dans lequel, pendant la deuxième période de temps, la deuxième sous-séquence de températures sur la paroi externe du tube du reformeur contenant un catalyseur (202) dépasse la première sous-séquence de températures du gaz de processus d'une valeur indicative de la formation de carbone sur le segment de paroi interne du tube du reformeur contenant un catalyseur (202), et la deuxième sous-séquence de températures du gaz de processus se situe dans une plage indicative de la formation de carbone sur le segment de paroi interne du tube du reformeur contenant un catalyseur (202), déterminant ainsi le débit de vapeur auquel se forme le carbone sur le segment de paroi interne du tube du reformeur contenant un catalyseur (202).

12. Le procédé selon la revendication 11, dans lequel le débit de vapeur est réglé dans l'étape de la régulation du débit de vapeur pendant une troisième période de temps lorsqu'une troisième quantité du mélange du gaz d'alimentation du reformeur (15) est introduite dans le tube du reformeur contenant un catalyseur (202), la troisième quantité du mélange du gaz d'alimentation du reformeur (15) ayant un rapport molaire vapeur/carbone avec une troisième valeur moyenne, la troisième valeur moyenne étant supérieure ou égale à la deuxième valeur moyenne et inférieure ou égale à la deuxième valeur moyenne plus 0,2.

13. Le procédé selon l'une des revendications précédentes comprenant par ailleurs:

la séparation d'une charge d'une unité d'adsorption à pression modulée dans une unité d'adsorption à pression modulée (501) pour former un produit gazeux contenant de l'hydrogène (30) et un sous-produit gazeux de l'unité d'adsorption à pression modulée (82), la charge de l'unité d'adsorption étant formée à partir d'au moins une partie du reformat (25) à partir du tube contenant un catalyseur, le combustible comprenant au moins une partie du sous-produit gazeux de l'unité d'adsorption à pression modulée.

*FIG. 1*

EP 3 144 275 B1

EP 3 144 275 B1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013002752 A

- US 8300880 B

**Non-patent literature cited in the description**

- **SMITH IV et al.** *Reformer monitoring via in-tube temperature measurement,* 2014, www.digitalrefining.com/article/1000924